# FASCICULE DE BREVET EUROPEEN

(11) **EP 2 572 239 B1**
(45) Date de publication et mention de la délivrance du brevet: **10.02.2016**
(21) Numéro de dépôt: 11716969.8
(22) Date de dépôt: 05.05.2011
(51) Int. Cl.: G02F 2/02, H01S 3/067

(54) **DISPOSITIF ET PROCÉDÉ DE GÉNÉRATION D'UN PEIGNE DE FRÉQUENCES LARGE BANDE**
VORRICHTUNG UND VERFAHREN ZUR ERZEUGUNG EINES BREITBANDFREQUENZKAMMS
DEVICE AND METHOD FOR GENERATING A WIDE BAND FREQUENCY COMB

(30) Priorité: 18.05.2010 FR 1053814
(43) Date de publication de la demande: 27.03.2013
(73) Titulaire: Centre National d'Etudes Spatiales, 75001 Paris (FR)
(72) Inventeur: MONDIN, Linda, F-31520 Ramonville Saint Agne (FR); LEMAITRE, François, F-31650 Lauzerville (FR); ORLIK, Xavier, F-31300 Toulouse (FR)
(74) Mandataire: Regimbeau
(86) Numéro de dépôt international: PCT/EP2011/057244
(87) Numéro de publication internationale: WO 2011/144460

(56) Documents cités:
- EP-A2- 1 209 780
- JRME VASSEUR ET AL: "Alternate Multiwavelength Picosecond Pulse Generation by Use of an Unbalanced Mach-Zehnder Interferometer in a Mode-locked Fiber Ring Laser", IEEE JOURNAL OF QUANTUM ELECTRONICS, IEEE SERVICE CENTER, PISCATAWAY, NJ, USA, vol. 43, no. 1, 1 janvier 2007 (2007-01-01), pages 85-96, XP011152944, ISSN: 0018-9197, DOI: DOI:10.1109/JQE.2006.885211
- RYU H Y ET AL: "Optical frequency measurement using an optical frequency comb generator based on frequency shifted feedback fiber ring laser", PRECISION ELECTROMAGNETIC MEASUREMENTS DIGEST, 2008. CPEM 2008. CONFERENCE ON, IEEE, PISCATAWAY, NJ, USA, 8 juin 2008 (2008-06-08), pages 622-623, XP031465107, ISBN: 978-1-4244-2399-6
- ENDO M ET AL: "Investigation of single sideband optical frequency comb generations using a dual-electrode Mach-Zehnder modulator in a fiber recirculating loop", TECHNICAL DIGEST. CLEO/PACIFIC RIM '99. PACIFIC RIM CONFERENCE ON LASERS AND ELECTRO-OPTICS (CAT. NO.99TH8464), IEEE, PISCATAWAY, NJ, USA, vol. 3, 30 août 1999 (1999-08-30), pages 771-772, XP010364497, DOI: DOI:10.1109/CLEOPR.1999.817825 ISBN: 978-0-7803-5661-0

## Description

### DOMAINE DE L'INVENTION

L'invention concerne un dispositif et un procédé pour générer à l'aide d'un laser maître un peigne de fréquences large bande continu formé d'une pluralité de raies régulièrement espacées, disposant des mêmes propriétés spectrales que le laser maître et d'un bruit de phase réduit.

### ARRIERE PLAN DE L'INVENTION

Sont listés ci-après quatre domaines d'utilisation privilégiés d'une source laser ayant des caractéristiques de stabilité fréquentielle, faible largeur de raie et possibilité d'obtenir de la puissance à des longueurs d'onde écartées sans impacter les deux premiers paramètres.
✔ Métrologie des fréquences, caractérisation fréquentielle et spectrale de sources laser ;
✔ Métrologie des distances (besoin d'une source au moins bi-longueur d'onde), soit par temps de vol, soit par mesure interférométrique ;
✔ Refroidissement et manipulation d'atomes (sans besoin de faire varier la fréquence d'un laser maître avec un gain donc important sur le facteur d'utilisation; obtention d'une émission de puissance par injection dans une diode sans dégradation de la largeur de raie) ;
✔ Spectroscopie (possibilité d'utiliser plusieurs longueurs d'ondes pour sonder un gaz par exemple).

Une solution souvent utilisée pour obtenir des références de fréquence large bande est d'auto-référencer un peigne de fréquence. On utilise pour ce faire un laser à impulsions extra courtes qui fournit des raies très fines (kHz au mieux) espacées de quelques dizaines de MHz. La plupart des peignes de fréquences actuels sont ainsi obtenus à l'aide de lasers impulsionnels femtosecondes (très large bande >100nm), ou encore à l'aide de lasers picosecondes qui sont développés pour des utilisations dans lesquelles un nombre inférieur de composantes spectrales sont nécessaires. Dans l'art antérieur, le document "Alternate Multiwavelength Picosecond Pulse Generation by Use of an Unbalanced Mach-Zehnder Interferometer in a Mode-locked Fiber Ring laser" de Vasseur *et al.*, exploite un laser impulsionnel picoseconde, afin d'obtenir des trains de pulsations à différentes fréquences.

Outre que le coût d'un tel laser à impulsions est significatif, le grand nombre de raies fournies (proches en fréquence) pose des soucis de filtrage et s'avère non adéquat pour certaines applications (mesure de distance, manipulation d'atomes). De plus le régime impulsionnel pose des interrogations pour l'utilisation couplée avec par exemple un amplificateur fibré. En outre, afin d'obtenir de la puissance à une longueur d'onde choisie, il faut verrouiller en fréquence une diode sur une dent du peigne fs. La stabilité de fréquence est alors maintenue, mais on perd la largeur de raie de la source fs.

Il s'avère donc préférable dans les domaines d'application de l'invention d'utiliser une source peigne continu dans la mesure où une injection de diode peut être effectuée en transférant ainsi à la source de puissance non pas seulement la stabilité fréquentielle de la source peigne mais aussi sa largeur de raie intrinsèque.

Toutefois, les rares lasers peignes de fréquences développés en mode continu utilisent les modes longitudinaux d'une cavité (typiquement cavité Fabry-Perrot). La stabilité des raies obtenues va alors dépendre des fluctuations de longueur de la cavité.

On connaît du document EP 1 209 780 une technique pour générer un peigne de raies régulièrement espacées, en régime continu, sur un spectre large bande qui n'utilise pas d'effet cavité. Cette technique utilise de multi-passages dans une boucle fibrée injectée par un laser maître, contenant un modulateur électro-optique et un amplificateur optique.

Les inventeurs ont pu démontrer qu'en mettant en oeuvre cette technique, la finesse spectrale du laser maître est en grande partie conservée, y compris dans les harmoniques lointaines. Cependant, les multi-passages de l'onde du laser maitre dans la boucle provoquent des interférences et rendent le spectre instable et peu utilisable. Cet inconvénient est d'ailleurs mentionné dans le document EP 1 209 780 au § [0023], lignes 22-24.

Une solution pour remédier à ce problème d'interférence est présentée dans le document EP 1 209 780. Elle consiste à élargir la source laser pour permettre de décorréler les différents passages dans la boucle. Mais compte tenu de la largeur de raie nécessaire pour obtenir cette décorrelation (environs 50MHz, plus large que la majorité des diodes de puissances), le peigne généré n'a aucune application possible en métrologie.

L'invention a pour objectif de remédier à cet inconvénient en proposant une technique qui permette de générer un peigne de raies régulièrement espacées, en régime continu, sur un spectre large bande (s'étalant sur plusieurs nanomètres optiques, plus de 10 nanomètres typiquement) tout en conservant la cohérence du signal et les relations de phase entre les différentes harmoniques (et ce sur l'intégralité de l'étendue du peigne de fréquences), ainsi qu'une largeur de raie compatible avec les applications envisagées, sans pour autant utiliser un contrôle actif de la longueur de la boucle (cavité de génération du peigne).

### EXPOSÉ DE L'INVENTION

A cet effet, l'invention propose, selon un premier aspect, un dispositif de génération d'un peigne de fréquences large bande en régime continu, comprenant :
- une boucle de fibre optique,
- une source laser en régime continu délivrant une raie laser à une fréquence de référence, la source laser étant couplée à la boucle pour que la raie laser délivrée par la source réalise de multi-passages dans la boucle,
- un modulateur de phase disposé dans la boucle de fibre optique, ledit modulateur de phase étant apte à générer des raies latérales à partir d'une raie centrale incidente, une pluralité de raies régulièrement espacées étant alors générées sur une large bande de part leurs passages dans le modulateur de phase ;
caractérisé en ce qu'il comprend en outre des moyens de transposition en fréquence disposés dans la boucle de fibre optique, lesdits moyens de transposition en fréquence comprenant un modulateur acousto-optique et venant décaler ladite pluralité de raies générées sur la boucle à chaque passage dans la boucle.

Certains aspects préférés, mais non limitatifs, de ce dispositif sont les suivants :
- le modulateur de phase et les moyens de transposition en fréquence sont disposés en série sur la boucle ;
- la boucle comporte également un amplificateur optique ;
- le modulateur de phase est constitué par un modulateur électro-optique ;
- il comprend en outre un synthétiseur hyperfréquence pilotant le modulateur de phase, ledit synthétiseur hyperfréquence délivrant une fréquence de modulation dans la gamme 100 MHz-50 GHz ;
- il comprend en outre un synthétiseur radiofréquence pilotant les moyens de transposition en fréquence, ledit synthétiseur radiofréquence délivrant une fréquence d'e transposition dans la gamme 20 MHz-400MHz.

Selon un second aspect, l'invention concerne un procédé de génération d'un peigne de fréquences large bande en régime continu, dans lequel on utilise une source laser délivrant une raie laser à une fréquence de référence en régime continu, dans lequel on couple la source laser à une boucle de fibre optique dans laquelle est disposé un modulateur de phase apte à générer des raies latérales à partir d'une raie centrale incidente, et dans lequel on réalise dé multi-passages de la raie laser délivrée par la source laser dans la boucle de fibre optique, une pluralité de raies régulièrement espacées étant alors générées sur une large bande de part les multi-passages de la raie laser dans la boucle, caractérisé en ce que l'on réalise une transposition en fréquence de ladite pluralité de raies générées sur la boucle à chaque passage dans la boucle.

### BREVE DESCRIPTION DES DESSINS

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un schéma illustrant un mode de réalisation possible du dispositif selon le premier aspect de l'invention
- la figure 2 représente un peigne de fréquences obtenu par l'invention disposant d'une étendue spectrale de l'ordre de 2 nm optique ;
- la figure 3a, respectivement la figure 3b, représente un peigne de fréquences disposant d'une étendue spectrale de l'ordre de 10 nm optique et s'étendant globalement à droite, respectivement à gauche, de la raie centrale ;
- la figure 4 est un schéma représentant la bande passante d'un amplificateur fibré

### DESCRIPTION DETAILLEE DE L'INVENTION

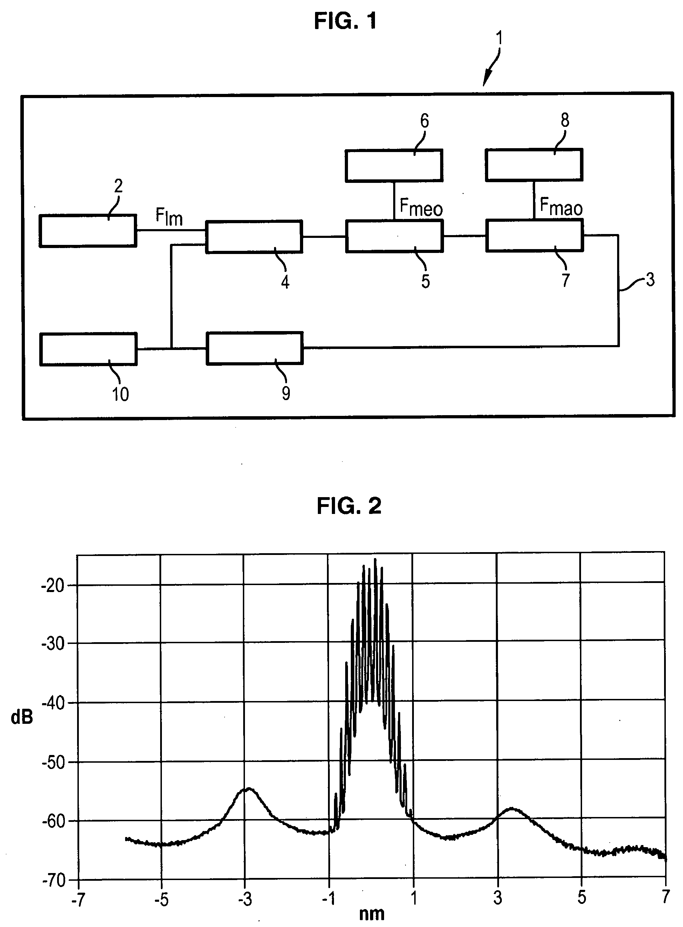

En référence à la figure 1, on a représenté un mode de réalisation possible d'un dispositif de génération d'un peigne de fréquences large bande 1 conforme au premier aspect de l'invention.

Le dispositif 1 comprend une boucle de fibre optique 3 dans laquelle est disposé un modulateur de phase 5 apte à générer des raies latérales à partir d'une raie centrale incidente.

Le modulateur de phase 5 est par exemple un modulateur électro-optique piloté par un synthétiseur hyperfréquence 6 délivrant une fréquence de modulation Fmeo haute fréquence, typiquement comprise dans la gamme 100 MHz-50 GHz.

Le dispositif comporte en outre une source laser 2 extérieure à la boucle 3. La source laser 2 fonctionne en régime continu et délivre une raie de fréquence Flm. La source laser est couplée à la boucle 3 par l'intermédiaire d'un coupleur optique 4 pour que la raie laser délivrée par la source réalise de multi-passages dans la boucle 3, une pluralité de raies régulièrement espacées étant alors générées sur une large bande de part leurs passages dans le modulateur de phase 5.

Comme discuté précédemment, les multi-passages de la raie laser dans la boucle comprenant le modulateur de phase 5 permettent de générer un peigne de raies régulièrement espacées, en régime continu, sur un spectre de plusieurs nanomètres. La finesse spectrale de la raie laser délivrée par la source 2 est en outre en grande partie conservée, et ce y compris dans les harmoniques lointaines. Toutefois, les multi-passages de l'onde dans la boucle provoquent des interférences qui peuvent rendre le spectre instable voire inutilisable.

Afin de conserver toute la cohérence du signal et les relations de phase entre les différentes harmoniques, et ce sur l'intégralité de l'étendue spectrale du peigne de fréquences, l'invention prévoit d'insérer des moyens de transposition en fréquence sur la boucle. Ainsi, dans le cadre de l'invention, la boucle 3 comporte en outre des moyens de transposition en fréquence 7 venant décaler ladite pluralité de raies générées sur la boucle, à chaque passage dans la boucle. Ce décalage en fréquences permet de briser le phénomène d'interférence tout en conservant une excellente étendue spectrale du peigne.

Les moyens de transposition en fréquence sont par exemple constitués par un modulateur acousto-optique 7 piloté par un synthétiseur radiofréquence 8 délivrant une fréquence de modulation Fmao basse fréquence, typiquement comprise dans la gamme 20MHz-400MHz. La fréquence de modulation Fmao est notamment une valeur discrète parmi l'une des valeurs suivantes : 20MHz, 40MHz, 80MHz, 160MHz, 200MHz, 250MHz et 400 MHZ, et ce en fonction du modulateur acousto-optique utilisé. On relèvera que chacune de ces valeurs discrètes peut être légèrement ajustée. Il est aussi envisageable de jouer sur les harmoniques de la fréquence de modulation de base du modulateur acousto-optique.

On relèvera que les moyens de transposition en fréquence 7 sont préférentiellement agencés sur la boucle en série avec le modulateur de phase 5.

La boucle comporte en outre typiquement un amplificateur fibré 9 qui vient amplifier le peigne de raies fournie par l'association série du modulateur de phase 5 et des moyens de transposition en fréquence 7. L'amplificateur fibré est par exemple du type EDFA (« Erbium-Ytterbium Doped Fiber Amplifier » désignant un amplificateur de fibre optique dopé à l'erbium).

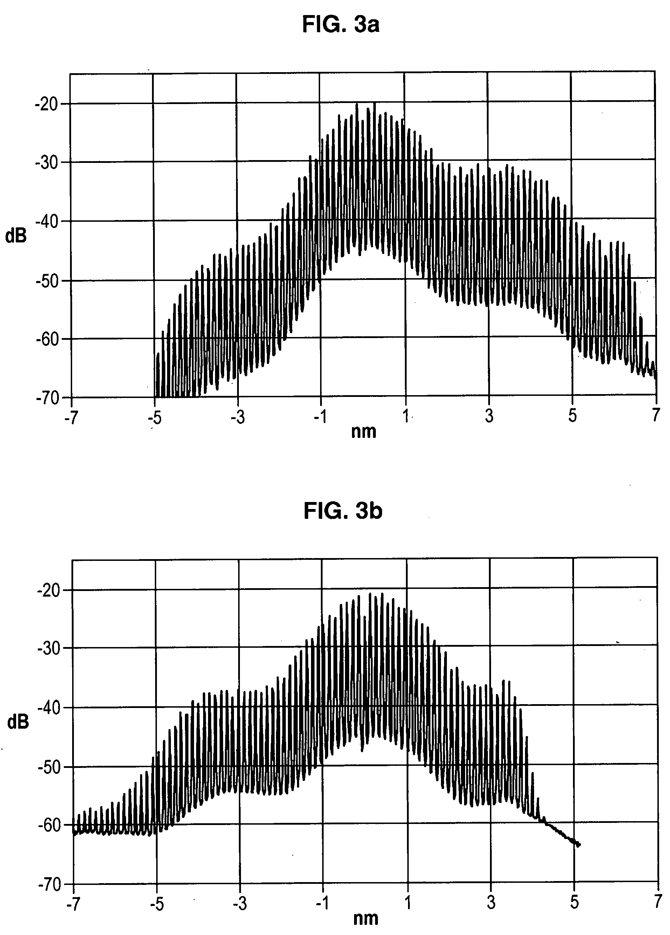

On a par ailleurs représenté sur la figure 1 un analyseur de spectre optique 10 couplé à la boucle 3 pour analyser le peigne de fréquences obtenu par les multi-passages dans la boucle. C'est à l'aide d'un tel analyseur 10 que les spectres des figures 2 et 3a-3b ont été obtenus.

On aura compris que dans le cadre de l'invention, le peigne de fréquences est obtenu par passages multiples dans le modulateur électro-optique (MEO dans ce qui suit) fibré haute fréquence. Ce type de composant (par exemple un Mach-Zender fibré) peut effectivement moduler à très haute fréquence (20GHz par exemple) un faisceau laser avec un voltage de déphasage (Vπ) de l'ordre de la dizaine de V. Il est donc possible avec ce type de composant de créer des bandes latérales très écartées en fréquence avec des voltages contenus.

Ainsi, la combinaison du faisceau laser délivré par la source 2 et de la sortie de l'amplificateur fibré 5 est modulée dans le MEO selon la fréquence Fmeo, transposé dans le modulateur acousto-optique 7 (MAO dans ce qui suit) de la fréquence Fmao, puis réinjecté dans l'amplificateur 9. A chaque cycle, une modulation sinusoïdale de phase est ajoutée au signal existant, ainsi qu'une transposition. Les raies harmoniques ainsi générées à chaque cycle n'interfèrent pas, évitant ainsi les problèmes d'interférence observés sans la présence du MAO.

En théorie, des interférences pourraient voir le jour après un grand nombre de cycles si la fréquence de modulation Fmeo était un multiple exact de la fréquence de transposition Fmao. Toutefois, en pratique, compte tenu de la grande différence entre la fréquence de modulation Fmeo (typiquement de l'ordre de plusieurs GHz) et la fréquence de transposition Fmao (quelques dizaines de MHz), il est difficile de se retrouver dans une configuration instable.

La source laser utilisée dans le cadre de l'invention est de préférence une source laser ayant de propriétés spectrales intéressantes en termes de stabilité intrinsèque de fréquence, de puissance et de largeur de raie.

En particulier, une source laser fibre proche de 1560nm peut être choisie. Sa largeur de raie est de l'ordre de la dizaine de kHz. Le choix de travailler dans les longueurs d'onde télécom est motivé par l'existence d'un grand nombre de composants fibrés faible coût et présentant des qualifications requises par la norme Telcordia (analogue de l'ancien standard MIL).

De plus les fréquences proches de 1560nm permettent de bénéficier des transitions étroites du Rubidium @780nm (par doublage de fréquence) ou de celles de l'acétylène, dans la bande 1530-1560 nm, pour la stabilisation en fréquence de la source à un niveau de plusieurs 10⁻¹² /√Hz.

On aura cependant compris que la technique d'obtention du peigne est complètement transposable à toute autre longueur d'onde pour laquelle une source laser ayant des propriétés spectrales intéressantes et une référence de fréquence étroite est disponible. Les composants électro-optiques et acousto-optiques sont disponibles pour des domaines spectraux variés tandis que des amplificateurs peuvent être développés avec des matériaux autres que l'Erbium.

Dans le cadre de l'invention, les fréquences Fp des raies du peigne de fréquences se calculent comme suit : Fp = Flm + k.Fmeo + n.Fmao, avec *k* ∈ *Z n* ∈ *N* et où :
- Flm désigne la fréquence de la raie laser délivrée par le laser source ;
- le facteur k provient de la modulation sinusoïdale de phase à la fréquence Fmeo qui génère des harmoniques multiples dont les niveaux dépendent de l'indice de modulation ;
- le facteur n provient des multi-passages dans la boucle : à chaque cycle l'ensemble du spectre est transposé de Fmao.

On comprend par cette formule que les raies du peigne généré par le dispositif selon le premier aspect de l'invention sont accordables.

Par ailleurs, on retiendra que contrairement aux techniques existantes qui génèrent des raies en mode continu en utilisant les modes longitudinaux d'une cavité, le dispositif proposé par l'invention génère ces raies sans utiliser les conditions aux limites d'une cavité et donc sans être soumis aux fluctuations de longueur de celle-ci. La technique proposée utilise au contraire l'excellente stabilité des sources radiofréquences pour générer l'écart entre les différentes raies ce qui explique leur bien meilleure stabilité, sans aucun asservissement.

Ainsi, à partir d'une fréquence laser de référence, il s'avère possible de générer des raies aux mêmes propriétés spectrales sur plus de 10 nm optique, ce qui représente une avancée notable par rapport aux techniques connues faisant état au mieux, sans asservissement actif de longueur de cavité, d'un peigne continu et cohérent étalant ses raies sur quelques nm environ.

On a représenté sur les figures 2, 3a et 3b différents peignes de fréquences générés par le dispositif selon le premier aspect de l'invention. Le peigne de la figure 2 présente une extension spectrale minimale de l'ordre de 2 nm optique, tandis que le peigne de la figure 3a, respectivement de la figure 3b présente une extension spectrale maximale de l'ordre de 10 nm optique et s'étendant globalement à droite, respectivement à gauche, de la raie centrale.

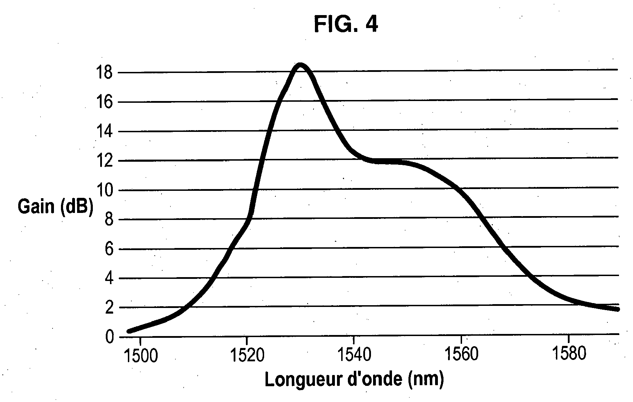

On notera que dans le cadre de l'invention, le facteur limitant l'étendue spectrale du peigne semble être la bande passante de l'amplificateur fibré représentée sur la figure 4. Le développement d'amplificateurs large bande devrait ainsi permettre d'obtenir une plus grande couverture spectrale. Dans la mesure où l'amplification est partagée sur toutes les composantes spectrales injectées, une bande spectrale plus large devra être accompagnée d'une amplification plus importante pour maintenir le même niveau de puissance par dent du peigne.

On aura enfin compris que l'invention n'est pas limitée à un dispositif selon son premier aspect, mais s'étend également à un procédé de génération d'un peigne de fréquences large bande en régime continu, dans lequel on utilise une source laser délivrant une raie laser à une fréquence de référence en régime continu, dans lequel on couple la source laser à une boucle de fibre optique dans laquelle est disposé un modulateur de phase apte à générer des raies latérales à partir d'une raie centrale incidente, et dans lequel on réalise de multi-passages de la raie laser délivrée par la source laser dans la boucle de fibre optique, une pluralité de raies régulièrement espacées étant alors générées sur une large bande de part les multi-passages de la raie laser dans la boucle, caractérisé en ce que l'on réalise une transposition en fréquence de ladite pluralité de raies générées sur la boucle à chaque passage dans la boucle.

## Revendications

1. Dispositif (1) de génération d'un peigne de fréquences large bande en régime continu, comprenant :
- une boucle de fibre optique (3),
- une source laser (2) en régime continu délivrant une raie laser à une fréquence de référence, la source laser étant couplée à la boucle pour que la raie laser délivrée par la source réalise de multi-passages dans la boucle (3),
- un modulateur de phase (5) disposé dans la boucle de fibre optique, ledit modulateur de phase étant apte à générer des raies latérales à partir d'une raie centrale incidente,
le dispositif étant configuré pour générer une pluralité de raies régulièrement espacées sur une large bande de par les multi-passages de la raie laser dans le modulateur de phase (5) de la boucle (3),
**caractérisé en ce qu'**il comprend en outre des moyens de transposition en fréquence (7) disposés dans la boucle de fibre optique (3), lesdits moyens de transposition en fréquence (7) comprenant un modulateur acousto-optique et étant configurés pour décaler en fréquence l'ensemble de la pluralité de raies générées sur la boucle à chaque passage dans la boucle.

2. Dispositif selon la revendication 1, dans lequel le modulateur de phase (5) et les moyens de transposition en fréquence (7) sont disposés en série sur la boucle.

3. Dispositif selon l'une des revendications précédentes, dans lequel la boucle comporte également un amplificateur optique (9).

4. Dispositif selon l'une des revendications précédentes, dans lequel le modulateur de phase (5) est constitué par un modulateur électro-optique.

5. Dispositif selon l'une des revendications précédentes, comprenant en outre un synthétiseur hyperfréquence (6) pilotant le modulateur de phase (5), ledit synthétiseur hyper fréquence délivrant une fréquence de modulation dans la gamme 100 MHz-50 GHz.

6. Dispositif selon l'une des revendications précédentes, comprenant en outre un synthétiseur radiofréquence (8) pilotant les moyens de transposition en fréquence (7), ledit synthétiseur radiofréquence délivrant une fréquence de transposition dans la gamme 20 MHz-400MHz.

7. Procédé de génération d'un peigne de fréquences large bande en régime continu, dans lequel on utilise une source laser (2) délivrant une raie laser à une fréquence de référence en régime continu, dans lequel on couple la source laser (2) à une boucle de fibre optique (3) dans laquelle est disposé un modulateur de phase (5) apte à générer des raies latérales à partir d'une raie centrale incidente, et dans lequel on réalise de multi-passages de la raie laser délivrée par la source laser (2) dans la boucle de fibre optique (3), une pluralité de raies régulièrement espacées étant alors générées sur une large bande de par les multi-passages de la raie laser dans la boucle, **caractérisé en ce que** l'on réalise une transposition en fréquence de l'ensemble de la pluralité de raies générées sur la boucle à chaque passage dans la boucle.

## Patentansprüche

1. Vorrichtung (1) zum Generieren eines kontinuierlichen Breitband Frequenzkamms, folgendes umfassend:
- eine Glasfaserschleife (3),
- eine kontinuierliche Laserquelle (2), die eine Laserlinie mit einer Bezugsfrequenz abgibt, wobei die Laserquelle mit der Schleife verbunden ist, damit die von der Quelle abgegebene Laserlinie mehrere Durchgänge in der Schleife (3) durchführt,
- einen Phasenmodulator (5), der in der Glasfaserschleife angeordnet ist, wobei der besagte Phasenmodulator in der Lage ist, aus einer einfallenden zentralen Linie Seitenlinien zu generieren,
wobei die Vorrichtung konfiguriert ist, um durch die mehreren Durchgänge der Laserlinie im Phasenmodulator (5) der Schleife (3) eine Vielzahl von regelmäßig beabstandeten Linien auf einem Breitband zu generieren,
**dadurch gekennzeichnet, dass** sie darüber hinaus Frequenzumsetzungsmittel (7) umfasst, die in der Glasfaserschleife (3) angeordnet sind, wobei die besagten Frequenzumsetzungsmittel (7) einen akustooptischen Modulator umfassen, und konfiguriert sind, um bei jedem Durchgang durch die Schleife die Frequenz der gesamten Vielzahl der auf der Schleife generierten Linien umzusetzen.

2. Vorrichtung nach Anspruch 1, wobei der Phasenmodulator (5) und die Frequenzumsetzungsmittel (7) in Reihe auf der Schleife angeordnet sind.

3. Vorrichtung nach irgendeinem der vorherigen Ansprüche, wobei die Schleife auch einen optischen Verstärker (9) umfasst.

4. Vorrichtung nach einem der vorherigen Ansprüche, wobei der Phasenmodulator (5) durch einen akustooptischen Modulator gebildet wird.

5. Vorrichtung nach einem der vorherigen Ansprüche, die darüber hinaus einen Hyperfrequenz-Synthesizer (6) umfasst, der den Phasenmodulator (5) steuert, wobei der besagte Hyperfrequenz-Synthesizer eine Modulationsfrequenz im Bereich zwischen 100 MHz und 50 GHz liefert.

6. Vorrichtung nach einem der vorherigen Ansprüche, die darüber hinaus einen Funkfrequenz-Synthesizer (8) umfasst, der die Frequenzumsetzungsmittel (7) steuert, wobei der besagte Funkfrequenz-Synthesizer eine Umsetzungsfrequenz im Bereich zwischen 20 MHz und 400 MHz liefert.

7. Verfahren zum Generieren eines kontniuierlichen Breitband Frequenzkamms, wobei man eine Laserquelle (2) verwendet, die kontinuierlich eine Laserlinie mit einer Bezugsfrequenz abgibt, wobei man die Laserquelle (2) mit einer Glasfaserschleife (3) verbindet, in der ein Phasenmodulator (5) angeordnet ist, der in der Lage ist, aus einer einfallenden zentralen Linie Seitenlinien zu generieren, und wobei man die aus der Laserquelle (2) abgegebene Laserlinie mehrmals in der Glasfaserschleife (3) durchgehen lässt, wobei somit durch die mehreren Durchgänge der Laserlinie in der Schleife eine Vielzahl von regelmäßig beabstandeten Linien auf einem Breitband generiert werden, **dadurch gekennzeichnet, dass** man bei jedem Durchgang in der Schleife eine Frequenzumsetzung an der gesamten Vielzahl von Linien durchführt, die auf der Schleife generiert werden.

## Claims

1. Device (1) for generating a continuous wide-band frequency comb, including:
- an optical fibre loop (3),
- a continuous laser source (2) providing a laser line at a reference frequency, the laser source being coupled to the loop so that the laser line provided by the source passes several times through the loop (3),
- a phase modulator (5) provided in the optical fibre loop, said phase modulator being capable of generating side lines from an incident central line,
the device being configured to generate a plurality of evenly spaced lines over a wide band due to the multiple passages of the laser line in the phase modulator (5) of the loop (3),
**characterised in that** it further comprises frequency transposition means (7) arranged in the optical fibre loop (3), said frequency transposition means (7) including an acousto-optic modulator and being configured for offsetting the frequency of all of the plurality of lines generated on the loop upon each passage in the loop.

2. Device according to claim 1, wherein the phase modulator (5) and the frequency transposition means (7) are arranged in series on the loop.

3. Device according to one of the previous claims, wherein the loop further comprises an optical amplifier (9) .

4. Device according to one of the previous claims, wherein the phase modulator (5) is formed by an electro-optic modulator.

5. Device according to one of the previous claims, further comprising a microwave synthesiser (6) controlling the phase modulator (5), said microwave synthesiser emitting a modulation frequency within the 100 MHz-50 GHz range.

6. Device according to one of the previous claims, further comprising a radio frequency synthesiser (8) controlling the frequency transposition means (7), said radio frequency synthesiser emitting a transposition frequency within the 20 MHz-400 MHz range.

7. Method for generating a continuous wide-band frequency comb, wherein a laser source (2) is used, providing a continuous laser line at a reference frequency, wherein the laser source (2) is coupled to an optical fibre loop (3) in which a phase modulator (5) is arranged, capable of generating side lines from an incident central line, and wherein the laser line provided by the laser source (2) passes several times through the optical fibre loop (3), a plurality of evenly spaced lines being then generated over a wide band due to the multiple passages of the laser line in the loop, **characterised in that** a frequency transposition is performed for all of the plurality of lines generated on the loop upon each passage in the loop.
